# EUROPEAN PATENT SPECIFICATION

(11) **EP 2 344 778 B1**
(45) Date of publication and mention of the grant of the patent: **11.06.2014**
(21) Application number: 09740524.5
(22) Date of filing: 19.10.2009
(51) Int. Cl.: F16B 31/04, B25B 29/02

(54) **BOLT ANCHORING DEVICE**
ANKERBOLZEN
DISPOSITIF D'ANCRAGE DE BOULON

(30) Priority: 10.11.2008 GB 0820507
(43) Date of publication of application: 20.07.2011
(73) Proprietor: Subsea Innovation Limited, Durham DL5 6AR (GB)
(72) Inventor: RITCHIE-BLAND, Gary, Newton Aycliffe Durham DL5 6DS (GB)
(74) Representative: Vinsome, Rex Martin
(86) International application number: PCT/GB2009/051395
(87) International publication number: WO 2010/052483

(56) References cited:
- WO-A1-00/51791
- FR-A- 1 402 429

## Description

The present invention relates to a bolt anchoring device and relates particularly, but not exclusively, to such a bolt anchoring device for use in undersea applications. The invention also relates to a bolt tensioning device for use with such a bolt tensioning device.

Bolt tensioning systems are widely used in undersea applications to form a joint between two pipe flanges by means of a bolt under tension passing through both flanges such that the tension of the bolt pulls the pipe flanges towards each other in order to tighten the joint between the flanges.

A known method of forming such a joint using a tensioned bolt comprises mounting a nut to the bolt on each side of the joint, placing the bolt under tension by means of a hydraulic bolt tensioning device, and tightening the nut by means of a toggle lever while the bolt is under tension. The tension applied by the hydraulic bolt tensioning device is then released, and the tension in the bolt pulls the two pipe flanges located between a pair of nuts on the bolt towards each other to form a tight joint.

This known arrangement suffers from the drawback that tightening the nut on the tensioned bolt by means of a toggle lever is a laborious process, which is particularly difficult to carry out in sub sea applications and is not easily automated because of the construction of the nut.

One known device for overcoming this problem consists of a bolt tensioning tool which includes a hydraulic motor which drives a gearbox which tightens the nut on the threaded bolt while the bolt is tensioned. Although this device can be operated remotely (i.e. from a surface vessel in a sub sea application), the leakage of hydraulic fluid from the hydraulic motor means that the size of hydraulic motor and associated power pack for supplying the hydraulic motor with power are so large that this limits the depth at which the bolt tensioner can be used.

Preferred embodiments of the present invention seek to overcome one or more of the above disadvantages of the prior art.

WO 00/51791 discloses a bolt anchoring device according to the preamble of claim 1.

According to an aspect of the present invention, there is provided a bolt anchoring device for mounting to a bolt to which tension is applied, the bolt anchoring device comprising:
a first housing adapted to be mounted to a bolt such that part of the bolt can slide in a first direction relative to said first housing as tension is applied to the bolt; and
at least one friction member adapted to be located between said first housing and the bolt, and to frictionally engage said bolt when the tension in said bolt is released, to resist movement of said part of the bolt relative to said housing in a second direction, opposite to said first direction;
characterised in that at least one said friction member and said first housing have mutually engaging tapering surfaces such that said friction member is adapted to slide in said second direction relative to said part of said bolt as tension is applied to the bolt, and is urged into frictional engagement with said part of said bolt when the tension in said bolt is released.

By providing at least one friction member adapted to be located between said first housing and the bolt, and to frictionally engage said bolt when the tension in said bolt is released, to resist movement of said bolt relative to said housing in a second direction, opposite to said first direction, this provides the advantage of maintaining tension in the bolt by means of a considerably simpler construction that an arrangement in which a threaded nut is tightened on the bolt. Because the friction member does not need to be rotated relative to the bolt, the use of a gearbox and hydraulic motor is not longer necessary, as a result of which a bolt tensioning device used with the bolt anchoring device can be of considerably more compact construction than in the prior art, since engagement of the friction member can be achieved by means of an axially acting piston, which is subject to considerably less leakage of hydraulic fluid. This in turn enables the more compact hydraulic apparatus used in the bolt tensioning apparatus, and the associated power pack which can also be more compact, to be used remotely at significantly greater depth than in the prior art. In addition, by providing at least one friction member which frictionally engages the bolt, tensioning of the bolt does not need to be increased in increments corresponding to a pitch of a screw thread of the bolt, but rather can increase over a continuous range. This enables more effective tightening of the bolt anchoring device.

At least one said friction member may have tapering thickness and have a first surface adapted to engage the bolt and a second surface adapted to engage the first housing.

The first housing may have an inner surface of tapering width such that movement of said bolt relative to the first housing in said second direction pulls said second surface into engagement with said inner surface.

This provides the advantage of enabling the friction member to be easily located between the bolt and the first housing, while enabling the tension in the bolt to pull the friction member into greater engagement with the bolt.

Said second surface may be lubricated.

Said first surface may have teeth and/or serrations and/or be roughened.

According to another aspect of the present invention, there is provided a bolt tensioning device comprising:-
a tensioner housing;
a first piston member slidably arranged in the tensioner housing and adapted to engage a bolt to place the bolt under tension; and
engaging means arranged in the tensioner housing and adapted to engage at least one friction member of a bolt anchoring device as defined above, wherein said first piston member is adapted to cause a portion of said bolt to move in said first direction relative to the first housing to place the bolt under tension;
characterised in that and said engaging means is adapted to cause at least one said friction member to move directly in said second direction relative to a portion of said bolt.

By providing a first piston member which moves a portion of the bolt in the first direction relative to the first housing, and engaging means which causes at least one said friction member to move in the second direction relative to a portion of the bolt, this provides the advantage of enabling the bolt tensioning device to be of simpler and more compact construction than in the prior art. In particular, the first piston member and the engaging means can both be axially moving pistons, as a result of which no gearbox of hydraulic motor is necessary.

Said engaging means may comprise a second piston member slidably arranged in said tensioner housing and adapted to move at least one said friction member in said second direction relative to a portion of the bolt.

The bolt tensioning device may further comprise hydraulic means for moving said first piston member relative to the tensioner housing.

The hydraulic means may be adapted to move said second piston member relative to the tensioner housing.

The device may be adapted to be operated by remote control.

According to a further aspect of the present invention, there is provided a method of mounting an anchoring device to a bolt, the method comprising:-
mounting an anchoring device as defined above to said bolt; and
applying tension to said bolt to cause a portion of said bolt to move in a first direction relative to said first housing;
characterised by causing at least one said friction member to move directly in said second direction relative to a portion of the bolt; and
releasing said tension to cause at least one said friction member to frictionally engage said bolt to resist movement of a portion of said bolt relative to said first housing in said second direction.

A preferred embodiment of the invention will now be described, by way of example only and not in any limitative sense, with reference to the accompanying drawings, in which:-
Figure 1 is a perspective view of a bolt tensioning device embodying an aspect of the present invention with part of a housing thereof removed;
Figure 2 is a perspective view of the bolt tensioning device of Figure 1 with a second piston thereof removed;
Figure 3 is a perspective view of the bolt tensioning device of Figure 2 with the first and second pistons thereof removed;
Figure 4 is a perspective view of the bolt tensioning device of Figure 1 mounted to a housing of a bolt anchor device embodying an aspect of the present invention with friction wedges thereof removed;
Figure 5 is a partial cross sectional view of the bolt tensioning device and bolt anchor device of Figure 4 with the friction wedges thereof in place;
Figure 6 is a partial cross sectional view of the bolt tensioning device and bolt anchor device of Figure 5 mounted to a bolt;
Figure 7 is a schematic cross sectional view of the bolt tensioning device and bolt anchor device of Figure 6 before application of tension to the bolt;
Figure 8 is a cross sectional schematic view of the arrangement of Figure 7 when tension is applied to the bolt;
Figure 9 is a schematic cross sectional view of the arrangement of Figure 7 in which tension is applied to the bolt and the friction wedges of the bolt anchor device are urged into the housing of the bolt anchor device;
Figure 10 is a schematic cross sectional view of the arrangement of Figure 7 in which the tension applied to the bolt is released while the friction wedges are urged into the housing of the bolt anchor device; and
Figure 11 is a schematic cross sectional view of the arrangement of Figure 7 in which the tension applied to the bolt is released and the pressure applied to the friction wedges is released.

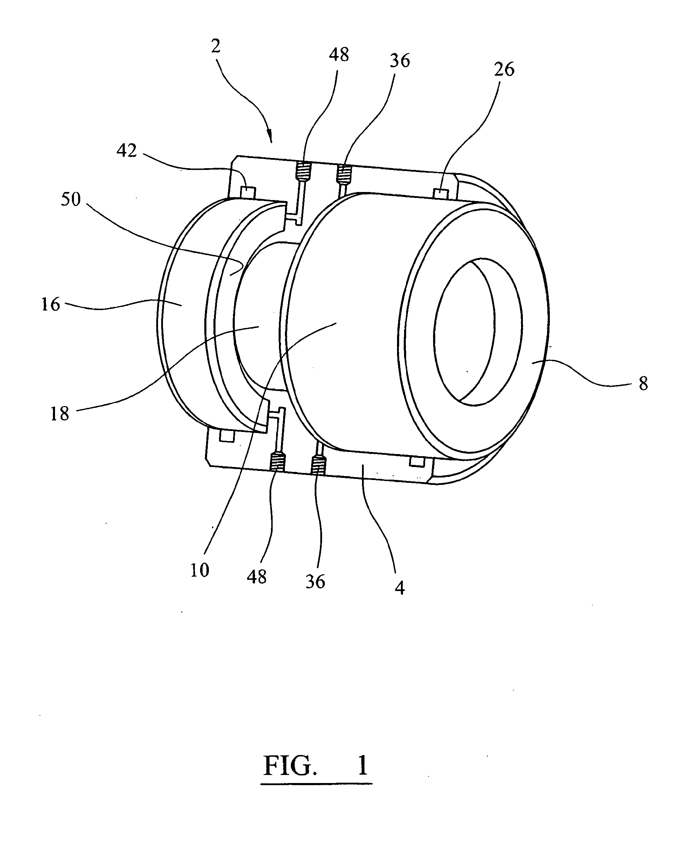

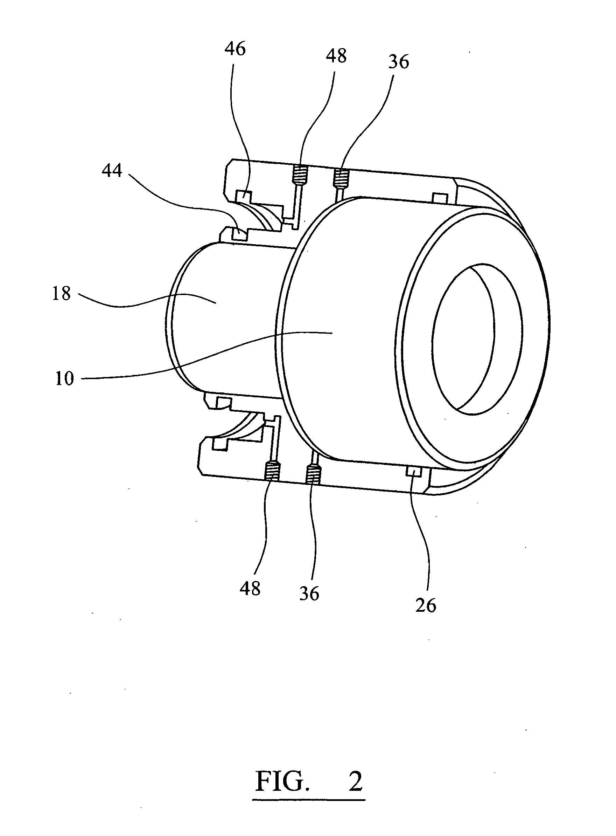

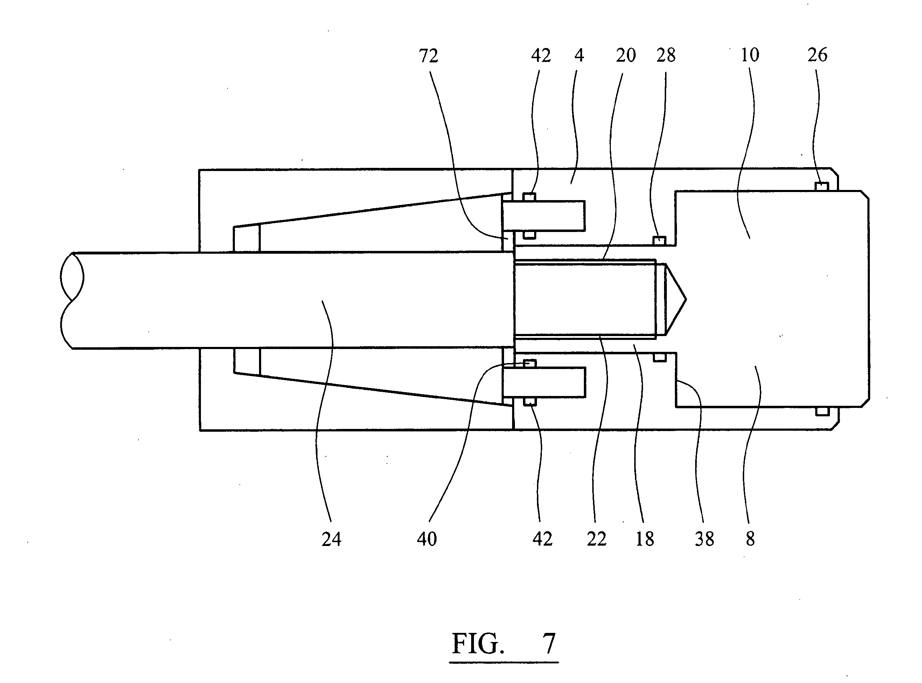

Referring to Figures 1 to 3, a bolt tensioning device 2 has a generally cylindrical housing 4 defining a cylindrical piston chamber 6 for receiving a cylindrical head 8 of a piston 10, a cylindrical bore 12, and an annular piston chamber 14 for receiving an annular piston 16, the annular piston chamber 14 surrounding the cylindrical bore 12. The piston 10 comprises head 8 and a cylindrical stem 18 of smaller diameter than the head 8. The stem 18 is hollow at its end remote from the head 8 and is provided with an internal screw thread 20 (Figure 7) for enabling the piston 10 to be mounted to an external screw thread 22 on an end of a bolt 24 to which tension is to be applied.

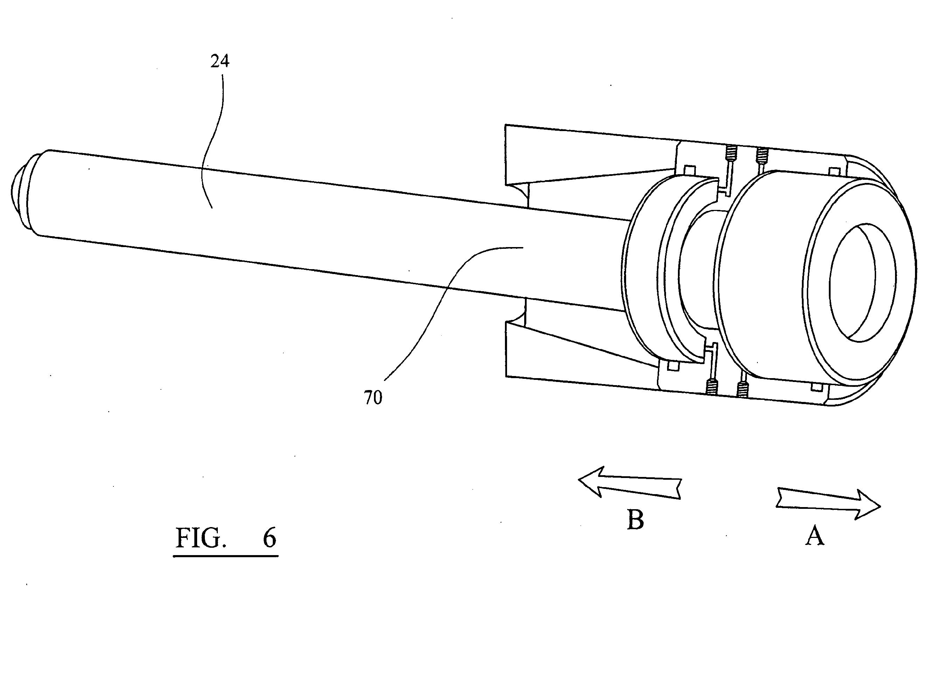

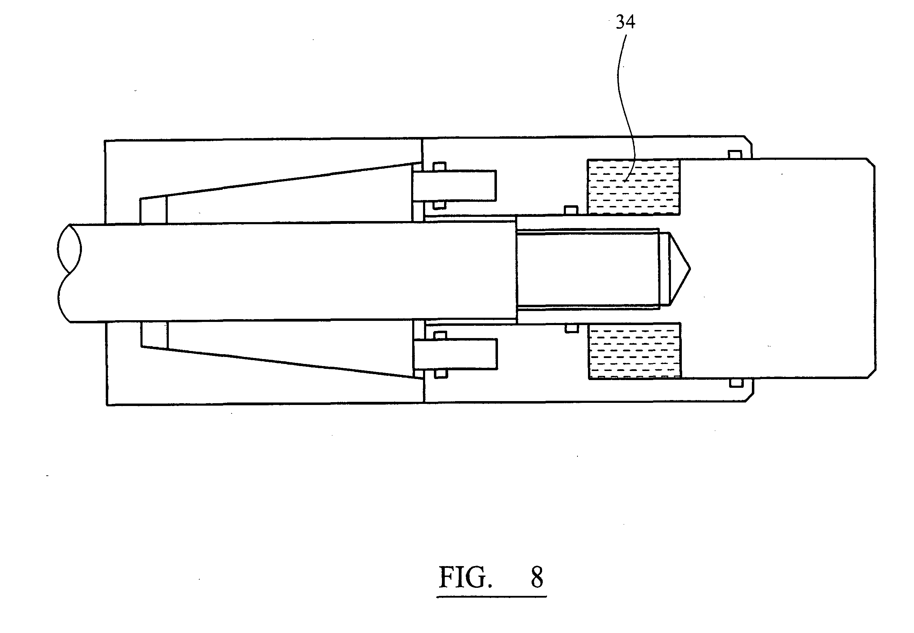

The piston 10 is slidably received in the housing 4 such that the cylindrical head 8 is slidably received in the piston chamber 6 and the stem 18 is slidably received in the cylindrical bore 12. The external surfaces of the head 8 and stem 18 engage respective seals 26, 28 mounted in respective annular grooves 30, 32 in the housing 4, such that the introduction of hydraulic fluid 34 (figure 8) through fluid ports 36 exerts a pressure on an end face 38 of the piston head 8 to move the piston 10 in the direction of arrow A shown in Figure 6 relative to the housing 4.

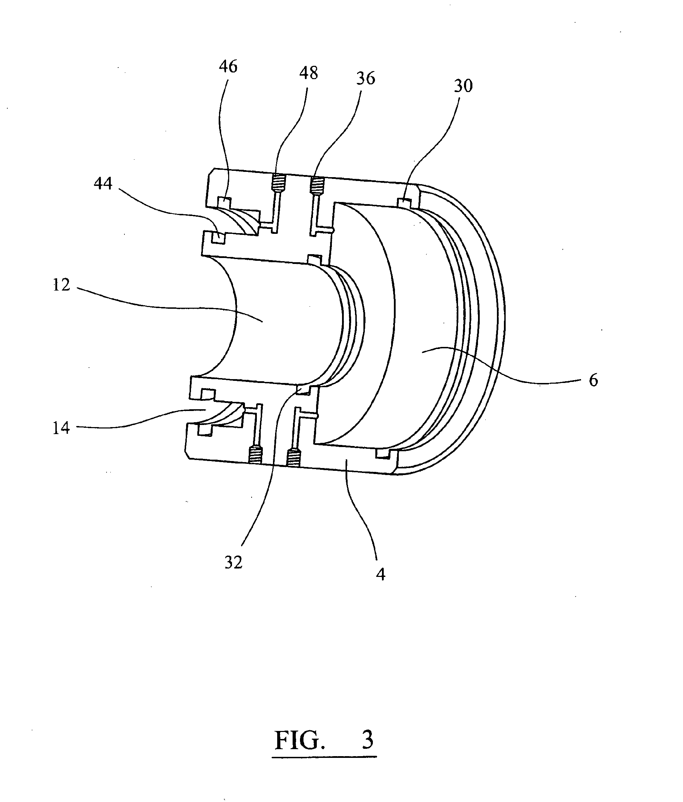

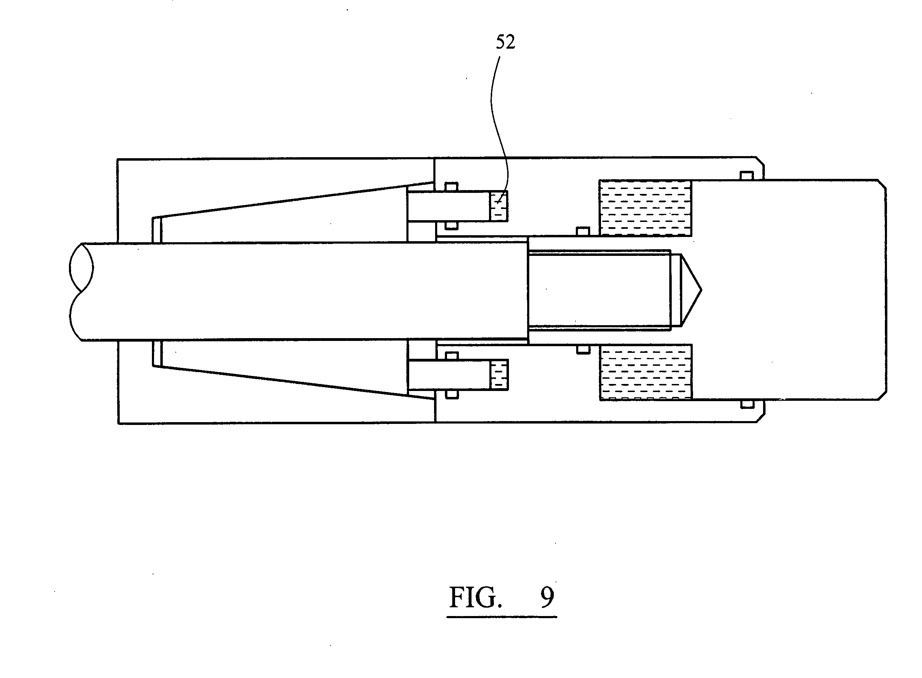

The annular piston 16 is slidably received in the annular chamber 14 and engages an internal annular seal 40 and an external annular seal 42 (Figure 7) located in respective grooves 44, 46 (Figure 3) such that introduction of hydraulic fluid 52 (Figure 9) through fluid ports 48 exerts a pressure on an end face 50 of the annular piston 16 to urge the piston 16 in the direction of arrow B shown in Figure 6.

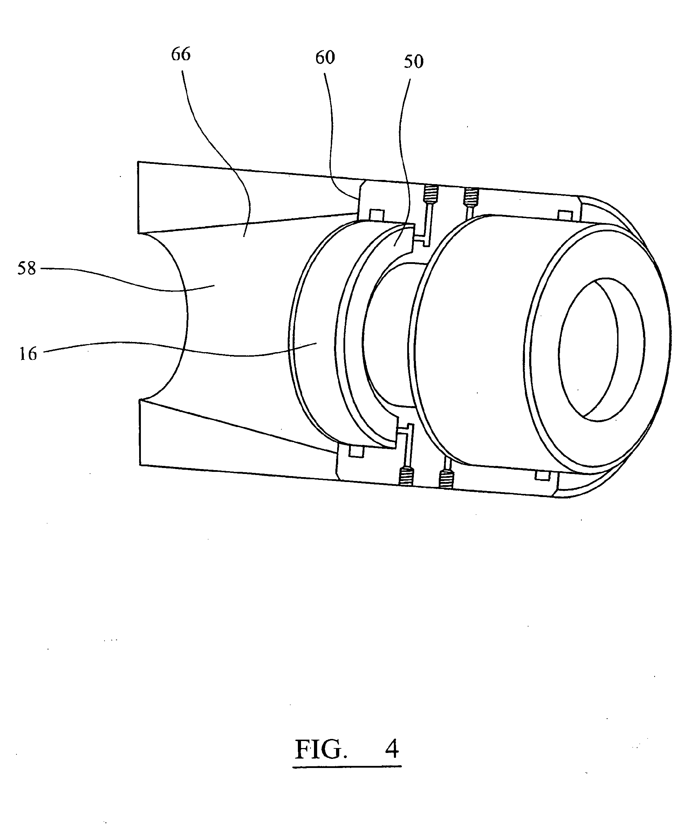

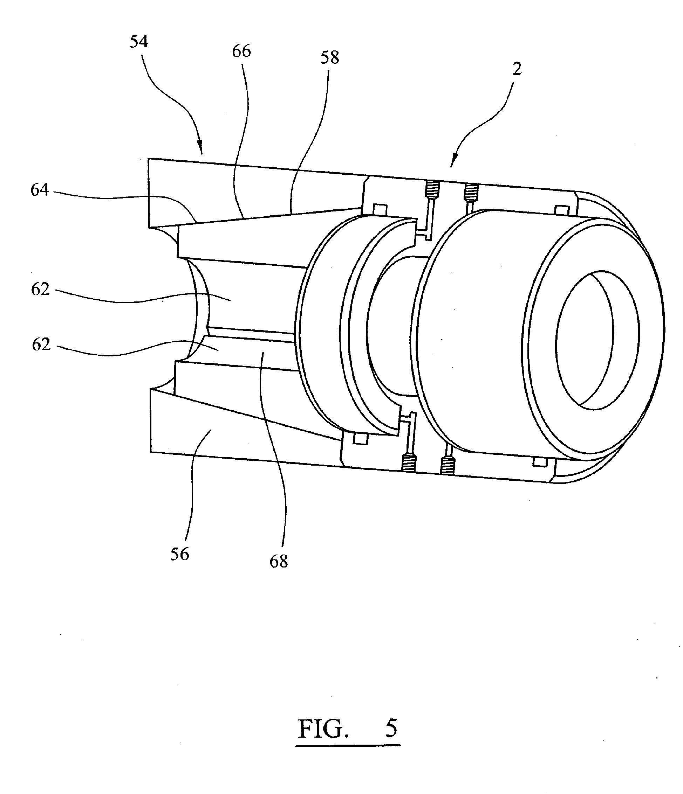

A bolt anchor device 54 (Figure 5) has a hollow cylindrical housing 56, which has a tapering truncated conical internal passageway 58 (Figure 4) and abuts an end face 60 of the housing 4 of the bolt tensioning device 2, and a plurality of wedge shaped friction members 62, each of which has a wedge angle of approximately 7.5° and is formed from case hardened steel. The friction members 62 each have a part-conical external face 64 which is lubricated and slidably abuts internal surface 66 of the housing 56, and a toothed part-cylindrical internal face 68 which is provided with serrations or teeth (not shown), for engaging a roughened portion 70 of the surface of the bolt 24 passing through the anchor device 54 so as to grip the external surface of the bolt 24. Each of the friction members 62 has an end face 72 which abuts the annular piston 16, such that as the piston 16 is urged in the direction of arrow B in Figure 6, the friction members 62 are urged into tighter engagement with the internal face 66 of the housing 56.

The operation of the bolt tensioning device 2 and bolt anchor device 54 will now be described with reference to Figures 7 to 11.

In order to form a tight joint between two components such as pipe flanges (not shown), the bolt 24 is passed through a hole in each pipe flange, and is anchored relative to the flanges by means of a suitable anchoring device such as a threaded split nut (not shown), which will be familiar to persons skilled in the art and will therefore not be described in further detail herein, such that sliding of the bar in the direction of arrow A relative to the flanges is prevented.

The assembly consisting of the bolt tensioning device 2 and the bolt anchor device 54 is slid onto the end of the bolt 24 remote from the split nut, and the internal screw thread 20 of the piston stem 18 of the bolt tensioning device 2 is screwed into engagement with the external screw thread 22 at the end of the bolt 24 until the arrangement is hand tight as shown in Figure 7 and the split nut and bolt anchor device 54 abut opposite sides of the flange joint.

In order to apply tension to the bolt 24, hydraulic fluid 34 is injected into fluid inlet ports 36 so as to urge the piston 10 in the direction of arrow A as shown in Figure A. Since the bolt 24 is prevented by the split nut from sliding in the direction of arrow A relative to the flanges, the bolt 24 is placed under tension. As a result of the tension in the bolt 24, which the portion of the bolt 24 surrounded by the friction members 62 is able to slide in the direction of arrow A relative to the friction members 62, and the friction members 62 move out of tight engagement with the internal surface 66 of the housing 56. The friction members 62 are then urged into tighter engagement with the internal surface 66 of the housing 56 by means of injection of hydraulic fluid 52 through fluid inlet 48 ports, as shown in Figure 9, which causes the annular piston 16 to move in the direction of arrow B relative to the housing 4. As a result, the serrated internal surfaces 68 of the friction members 62 are urged into tighter engagement with the roughened external surface 70 of the bolt 24.

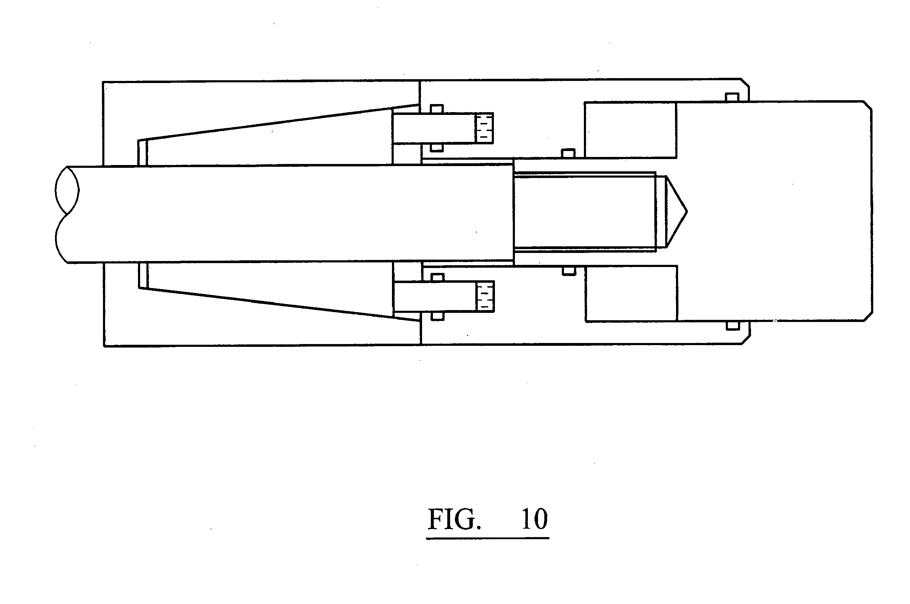

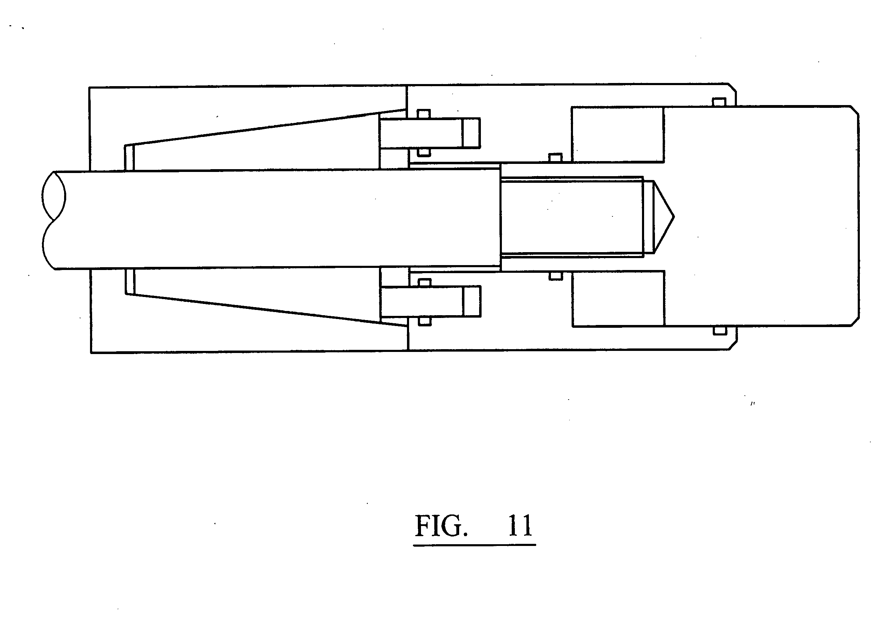

As shown in Figure 10, the hydraulic fluid pressure on the annular piston 16 is mantained so that the friction members 62 are held in tight engagement with the internal surface 66 of the housing 56, and the hydraulic pressure acting on the piston 10 is then released. As a result of the frictional engagement between the internal surfaces 68 of the friction members 62 and the roughened external surface 70 of the bolt 24, the bolt 24 is largely prevented from sliding in the direction of arrow B relative to the friction members 62, which are also pulled into tighter engagement with the internal surface 66 of the housing 56, thereby more tightly gripping the external surface 70 of the bolt 24. The hydraulic fluid pressure acting on the annular piston 16 is then released, as shown in Figure 11, as a result of which the friction members 62 are tightly clamped onto the external surface 70 of the bolt 24 between the bolt 24 and the internal surface 66 of the housing 56, to form a tight joint between the pipe flanges arranged on the bolt. The bolt tensioning device 2 can then be removed from the bolt 24 for re-use on another bolt anchor device 54, and the bolt anchor device 54 shown in Figure 11 remains fixed to the bolt 24.

In order to remove the anchor device 54 from the bolt 24, for example for repair of a pipe joint, the bolt tensioning device 2 is again mounted to the screw thread 22 at the end of the bolt 24, and the fluid pressure applied to the piston 10 to place the bolt 24 under tension. This causes movement of the friction members 62 in the direction of arrow A to disengage the friction members 62 from the internal surface 66 of the housing 56, as a result of which the friction members 62 can be removed.

## Claims

1. A bolt anchoring device for mounting to a bolt to which tension is applied, the bolt anchoring device comprising:
a first housing (56) adapted to be mounted to a bolt such that part of the bolt can slide in a first direction (A) relative to said first housing as tension is applied to the bolt; and
at least one friction member (62) adapted to be located between said first housing and the bolt, and to frictionally engage said bolt when the tension in said bolt is released, to resist movement of said part of the bolt relative to said first housing in a second direction (B), opposite to said first direction;
**characterised in that** at least one said friction member and said first housing have mutually engaging tapering surfaces (64, 58) such that said friction member is adapted to slide in said second direction relative to said part of said bolt as tension is applied to the bolt, and is urged into frictional engagement with said part of said bolt when the tension in said bolt is released.

2. A bolt anchoring device according to claim 1, wherein at least one said friction member has tapering thickness and has a first surface (68) adapted to engage the bolt and a second surface (64) adapted to engage the first housing, the second surface being one of said tapering surfaces.

3. A bolt anchoring device according to claim 2, wherein the first housing has an inner surface (58) of tapering width, the inner surface being one of said tapering surfaces, such that movement of said bolt relative to the first housing in said second direction pulls said second surface into engagement with said inner surface.

4. A bolt anchoring device according to claim 2 or 3, wherein said second surface is lubricated.

5. A bolt anchoring device according to any one of claims 2 to 4, wherein said first surface has teeth and/or serrations and/or is roughened.

6. A bolt tensioning device comprising:-
a tensioner housing (4);
a first piston member (10) slidably arranged in the tensioner housing and adapted to engage a bolt to place the bolt under tension; and
engaging means (16) arranged in the tensioner housing and adapted to engage at least one friction member of a bolt anchoring device according to any one of claims 1 to 5, wherein said first piston member is adapted to cause a portion of said bolt to move in said first direction relative to the first housing to place the bolt under tension; **characterised in that** said engaging means is adapted to cause at least one said friction member to move directly in said second direction relative to a portion of said bolt.

7. A bolt tensioning device according to claim 6, wherein said engaging means comprises a second piston member slidably arranged in said tensioner housing and adapted to move at least one said friction member in said second direction relative to a portion of the bolt.

8. A bolt tensioning device according to claim 6 or 7, further comprising hydraulic means (34, 36, 48, 52) for moving said first piston member relative to the tensioner housing.

9. A bolt tensioning device according to claims 7 and 8, wherein the hydraulic means is adapted to move said second piston member relative to the tensioner housing.

10. A bolt tensioning device according to any one of claims 6 to 9, wherein the device is adapted to be operated by remote control.

11. A method of mounting an anchoring device to a bolt, the method comprising:-
mounting an anchoring device (54) according to any one of claims 1 to 5 to said bolt (24); and
applying tension to said bolt to cause a portion of said bolt to move in a first direction (A) relative to said first housing;
**characterised by** causing at least one said friction member (62) to move directly in said second direction (B) relative to a portion of the bolt; and
releasing said tension to cause at least one said friction member to frictionally engage said bolt to resist movement of a portion of said bolt relative to said first housing in said second direction.

## Patentansprüche

1. Bolzenverankerungsvorrichtung zum Montieren eines Bolzens, auf welchen Spannung aufgebracht wird, wobei die Bolzenverankerungsvorrichtung umfasst:
ein erstes Gehäuse (56), das so ausgelegt ist, dass es derart an einem Bolzen montiert wird, dass ein Teil des Bolzens in eine erste Richtung (A) in Bezug auf das erste Gehäuse gleiten kann, wenn Spannung auf den Bolzen aufgebracht wird;
ein erstes Reibungselement (62), das so ausgelegt ist, dass es zwischen dem ersten Gehäuse und dem Bolzen angeordnet wird und reibschlüssig in den Bolzen eingreift, wenn die Spannung im Bolzen gelöst wird, um einer Bewegung des ersten Teils des Bolzens in Bezug auf das erste Gehäuse in eine zweite Richtung (B) entgegengesetzt zur ersten Richtung zu widerstehen;
**dadurch gekennzeichnet, dass** das mindestens eine Reibungselement und das erste Gehäuse ineinander eingreifende konisch zulaufende Flächen (64, 58) aufweisen, derart dass das Reibungselement so ausgelegt ist, dass es in die zweite Richtung in Bezug auf den Teil des Bolzens gleitet, wenn Spannung auf den Bolzen aufgebracht wird, und in reibschlüssigen Eingriff mit dem Teil des Bolzens gedrückt wird, wenn die Spannung im Bolzen gelöst wird.

2. Bolzenverankerungsvorrichtung nach Anspruch 1, wobei das mindestens eine Reibungselement eine konisch zulaufende Dicke aufweist und eine erste Fläche (68), die so ausgelegt ist, dass sie in den Bolzen eingreift, und eine zweite Fläche (64) aufweist, die so ausgelegt ist, dass sie in das erste Gehäuse eingreift, wobei die zweite Fläche eine der konisch zulaufenden Flächen ist.

3. Bolzenverankerungsvorrichtung nach Anspruch 2, wobei das erste Gehäuse eine Innenfläche (58) von konisch zulaufender Breite aufweist, wobei die Innenfläche eine der konisch zulaufenden Flächen ist, derart dass Bewegung des Bolzens in Bezug auf das erste Gehäuse in die zweite Richtung die zweite Fläche in Eingriff mit der Innenfläche zieht.

4. Bolzenverankerungsvorrichtung nach Anspruch 2 oder 3, wobei die zweite Fläche geschmiert ist.

5. Bolzenverankerungsvorrichtung nach einem der Ansprüche 2 bis 4, wobei die erste Fläche Zähne und/oder Kerbungen aufweist und/oder aufgeraut ist.

6. Bolzenspannvorrichtung, umfassend:
ein Spannvorrichtungsgehäuse (4);
ein erstes Kolbenelement (10), das verschiebbar im Spannvorrichtungsgehäuse angeordnet und so ausgelegt ist, dass es in einen Bolzen eingreift, um den Bolzen unter Spannung zu setzen;
Eingriffsmittel (16), das im Spannvorrichtungsgehäuse angeordnet und so ausgelegt ist, dass es in mindestens ein Reibungselement einer Bolzenverankerungsvorrichtung nach einem der Ansprüche 1 bis 5 eingreift, wobei das erste Kolbenelement so ausgelegt ist, dass es einen Abschnitt des Bolzens veranlasst, sich in die erste Richtung in Bezug auf das erste Gehäuse zu bewegen, um den Bolzen unter Spannung zu setzen;
**dadurch gekennzeichnet, dass** das Eingriffsmittel so ausgelegt ist, dass es das mindestens eine Reibungselement veranlasst, sich direkt in die zweite Richtung in Bezug auf einen Abschnitt des Bolzens zu bewegen.

7. Bolzenspannvorrichtung nach Anspruch 6, wobei das Eingriffselement ein zweites Kolbenelement umfasst, das verschiebbar im Spannvorrichtungsgehäuse angeordnet und so ausgelegt ist, dass es das mindestens eine Reibungselement in die zweite Richtung in Bezug auf einen Abschnitt des Bolzens bewegt.

8. Bolzenspannvorrichtung nach Anspruch 6 oder 7, ferner umfassend Hydraulikmittel (34, 36, 48, 52) zum Bewegen des ersten Kolbenelements in Bezug auf das Spannvorrichtungsgehäuse.

9. Bolzenspannvorrichtung nach Anspruch 7 und 8, wobei das Hydraulikmittel so ausgelegt ist, dass es das zweite Kolbenelement in Bezug auf das Spannvorrichtungsgehäuse bewegt.

10. Bolzenspannvorrichtung nach einem der Ansprüche 6 bis 9, wobei die Vorrichtung so ausgelegt ist, dass sie durch Fernsteuerung betrieben wird.

11. Verfahren zum Montieren einer Verankerungsvorrichtung an einem Bolzen, wobei das Verfahren umfasst:
Montieren einer Verankerungsvorrichtung (54) nach einem der Ansprüche 1 bis 5 am Bolzen (24); und
Aufbringen von Spannung auf den Bolzen, um einen Abschnitt des Bolzens zu veranlassen, sich in eine erste Richtung (A) in Bezug auf das erste Gehäuse zu bewegen;
**gekennzeichnet durch** Veranlassen mindestens eines Reibungselements (62), sich direkt in die zweite Richtung (B) in Bezug auf einen Abschnitt des Bolzens zu bewegen; und
Lösen der Spannung, um das mindestens eine Reibungselement zu veranlassen, reibschlüssig in den Bolzen einzugreifen, um einer Bewegung eines Abschnitts des Bolzens in Bezug auf das erste Gehäuse in die zweite Richtung zu widerstehen.

## Revendications

1. Dispositif d'ancrage de boulon permettant le montage d'un boulon auquel est appliquée une tension, le dispositif d'ancrage de boulon comprenant :
un premier carter (56) conçu pour être monté sur un boulon de telle sorte qu'une partie du boulon puisse glisser dans une première direction (A) relative audit premier carter lorsqu'une tension est appliquée au boulon ; et
au moins un organe de friction (62) conçu pour être placé entre ledit premier carter et le boulon, et pour s'enclencher avec ledit boulon sous l'effet de la friction lorsque la tension dans ledit boulon est relâchée, afin de résister au mouvement de ladite partie du boulon par rapport audit premier carter dans une deuxième direction (B), opposée à ladite première direction ;
**caractérisé en ce que** ledit organe de friction et ledit premier carter possèdent des surfaces coniques s'enclenchant mutuellement (64, 58) de telle sorte que ledit organe de friction est conçu pour glisser dans ladite deuxième direction par rapport à ladite partie dudit boulon lorsqu'une tension est appliquée au boulon, et est sollicité pour s'enclencher sous l'effet de la friction avec ladite partie dudit boulon lorsque la tension dans ledit boulon est relâchée.

2. Dispositif d'ancrage de boulon selon la revendication 1, dans lequel au moins un dit organe de friction possède une épaisseur à variation conique et possède une première surface (68) conçue pour s'enclencher avec le boulon et une deuxième surface (64) conçue pour s'enclencher avec le premier carter, la deuxième surface étant l'une desdites surfaces coniques.

3. Dispositif d'ancrage de boulon selon la revendication 2, dans lequel le premier carter possède une surface intérieure (58) d'une largeur à variation conique, la surface intérieure étant l'une desdites surfaces coniques, de telle sorte que le mouvement dudit boulon par rapport au premier carter dans ladite deuxième direction exerce une traction sur ladite deuxième surface permettant l'enclenchement avec ladite surface intérieure.

4. Dispositif d'ancrage de boulon selon la revendication 2 ou 3, dans lequel ladite deuxième surface est lubrifiée.

5. Dispositif d'ancrage de boulon selon l'une quelconque des revendications 2 à 4, dans lequel ladite première surface possède une dent et/ou des stries et/ou des propriétés de rugosité.

6. Dispositif d'application d'une tension à un boulon comportant :
un carter d'application d'une tension (4) ;
un premier organe formant piston (10) disposé pour pouvoir glisser dans le carter d'application d'une tension et conçu pour s'enclencher avec un boulon afin d'exercer une tension sur ledit boulon ; et
un moyen d'enclenchement (16) disposé dans le carter d'application d'une tension et conçu pour s'enclencher avec au moins un organe de friction d'un dispositif d'ancrage de boulon selon l'une quelconque des revendications 1 à 5, dans lequel ledit premier organe formant piston est conçu pour provoquer le déplacement d'une partie dudit boulon dans ladite première direction par rapport au premier carter pour exercer une tension sur le boulon ;
**caractérisé en ce que** ledit moyen d'enclenchement est conçu pour provoquer le déplacement d'au moins un dit organe de friction directement dans ladite deuxième direction par rapport à une partie dudit boulon.

7. Dispositif d'application d'une tension à un boulon selon la revendication 6, dans lequel ledit moyen d'enclenchement comporte un deuxième organe formant piston disposé pour pouvoir glisser dans ledit carter d'application d'une tension, et conçu pour déplacer au moins un dit organe de friction dans ladite deuxième direction par rapport à une partie du boulon.

8. Dispositif d'application d'une tension à un boulon selon la revendication 6 ou 7, comportant en outre un moyen hydraulique (34, 36, 48, 52) pour déplacer ledit premier organe formant piston par rapport au carter d'application d'une tension.

9. Dispositif d'application d'une tension à un boulon selon les revendications 7 et 8, dans lequel le moyen hydraulique est conçu pour déplacer ledit deuxième organe formant piston par rapport au carter d'application d'une tension.

10. Dispositif d'application d'une tension à un boulon selon l'une quelconque des revendications 6 à 9, dans lequel le dispositif est conçu pour être actionné par télécommande.

11. Procédé de montage d'un dispositif d'ancrage sur un boulon, le procédé comprenant :
le montage d'un dispositif d'ancrage (54) selon l'une quelconque des revendications 1 à 5 sur ledit boulon (24) ; et
l'application d'une tension audit boulon pour provoquer le déplacement d'une partie dudit boulon dans une première direction (A) par rapport audit premier carter ;
**caractérisé en ce qu'**il provoque le mouvement d'au moins un dit organe de friction (62) directement dans ladite deuxième direction (B) par rapport à une partie du boulon ; et
le relâchement de ladite tension pour provoquer l'enclenchement par friction dudit boulon avec au moins un dit organe de friction afin de résister au mouvement d'une partie dudit boulon par rapport audit premier carter dans ladite deuxième direction.
